# EUROPEAN PATENT APPLICATION

(11) **EP 1 657 646 A1**
(43) Date of publication of application: **17.05.2006**
(21) Application number: 04300760.8
(22) Date of filing: 04.11.2004
(51) Int. Cl.: G06F 13/38

(54) **Converting unit and system containing the same**

(71) Applicant: Thomson Licensing, 92100 Boulogne-Billancourt (FR)
(72) Inventor: Tsang, Wing Hon, Hong Kong (CN); Lui, Tsz Shing, Hong Kong (CN); Chak, Cheuk Fung, Hong Kong (CN)
(74) Representative: Rossmanith, Manfred

(57) **Abstract**

A converting unit and a system containing the same is disclosed. The converting unit is for converting a USB unadapted host apparatus into a USB-adapted host apparatus, the converting unit including a unit non-USB interface connected to the host apparatus interface, a unit output terminal connected to the host apparatus input terminal, a unit input terminal connected to the unit output terminal, a unit USB interface for connecting the USB interface, a converting circuit for carrying out an interface conversion between the unit non-USB interface and the unit USB interface, and a unit power supply input terminal for inputting the power supply.

## Description

### FIELD OF THE INVENTION

The present invention relates to a converting unit and a system containing the same, and particularly to a converting unit structured of IDE peripheral interface adjoining to the USB host interface, which enables the main host system to enjoy the advantages both of USB connection and of the IDE interface.

### BACKGROUND OF THE INVENTION

In the age of content sharing, different devices/systems can share the contents with each other through connections. Intelligent Drive Electronics (IDE) interface is one of these connections, which has been used for more than two decades. The IDE interface is commonly used to connect the mass storage such as hard disk drive. And the IDE interface is known by the skilled in the art for the following characteristics:
1. IDE is standard electrical interface for high-speed data transfer.
2. ATA/ATAPI is standard command set for the IDE devices such as Hard Disk, CD-ROM, DVD-ROM, etc.
3. Its variants are CFA and PCMCIA interfaces. Doing a small circuit change can make them communicate with IDE interface.
4. There are many different types of device using that interface (and its variants), e.g., mass/flash storage, Ethernet, Modem, GPS, picture/movie camera, bluetooth, IrDa, WiFi, etc.

However, it is not possible to perform functions of hot-swap and plug and use so that the power of the computer has to be shut down before the IDE storage device such as the hard disk in the computer being able to be replaced. In view of the bandwidth for communication, it will be more favourable to stream the content from the content storage device system to the player system than entirely downloading the content to the player system side before playback. On the other hand, it will be more beneficial for the player system to decide whether the content is playable or not. To fill these needs, the USB connection emerged in the market for several years ago and it has the following advantages:
1. hot plug and use;
2. commonness of interface for various devices;
3. expandable Bus topology and up to 127 devices running at the same time depending on bandwidth available;
4. unified resource in the system controlling many devices; and
5. power supply and management through the bus for the small devices.

Despite of these, the above-mentioned application of USB connection only concentrated on communication between the personal computer system and the USB client device systems but seldom exchanged content among device systems. Therefore, the USB host implementation embedded in the system is provided for this purpose. As known by the skilled in the art, re-implementation based on the USB host interface is needed for the main host system to enjoy the benefits of the USB connection, such as a build-in software. Moreover, the existing USB host implementation requires copying the content into the player before playback, which is very inconvenient and also intervenes with personal computer and ROM burner.

Accordingly, there remains a need for playback the content, especially the compressed content, directly from the external media, such as external flash memory or hard disc.

### SUMMARY OF THE INVENTION

According to the present invention, a converting unit is suggested to meet this need. The proposed approach is to build a functional hardware block that converts the interface from USB Host to IDE Peripheral to let the existing system with IDE Master Interface enjoy the USB connection advantage.

In one aspect of the invention, a converting unit for converting a universal serial bus (USB) unadapted host apparatus into a USB-adapted host apparatus is provided, the USB-unadapted host apparatus having a host apparatus interface for connecting a non-USB interface, a host apparatus input terminal for inputting a signal, and a host apparatus power supply input terminal for inputting a power supply, the converting unit including a unit non-USB interface connected to the host apparatus interface, a unit output terminal connected to the host apparatus input terminal, a unit input terminal connected to the unit output terminal, a unit USB interface for connecting a USB interface, a converting circuit for carrying out an interface conversion between the unit non-USB interface and the unit USB interface, and a unit power supply input terminal for inputting the power supply.

According to the invention, the host apparatus interface could be any one of intelligent drive electronics (IDE) interface, small computer system (SCSI) interface, CFA interface, or PCMCIA interface.

According to the invention, the USB-unadapted host apparatus could be any one of hard disk drive, CD-ROM, DVD-ROM, CD-R, DVD-R, CD-RW, or DVD-RW.

According to the invention, the unit non-USB interface could be any one of IDE interface, SCSI interface, CFA interface, or PCMCIA interface.

In the best mode of implementation, the converting circuit is an IDE peripheral interface circuit adjoining to a USB host interface circuit.

In another aspect of the invention, a system is provided. The system includes a USB-unadapted host apparatus, at least one converting unit, and at least one connector, the USB-unadapted host apparatus connected to the at least one converting unit via the at least one connector, the USB-unadapted host apparatus having at least one host apparatus interface for connecting at least one non-USB interface, at least one host apparatus input terminal for inputting a signal, and a host apparatus power supply input terminal for inputting a power supply, the converting unit including a unit non-USB interface connected to the host apparatus interface, a unit output terminal connected to the host apparatus input terminal, a unit input terminal connected to the unit output terminal, a unit USB interface for connecting the USB interface, a converting circuit for carrying out an interface conversion between the unit non-USB interface and the unit USB interface, and a unit power supply input terminal for inputting the power supply.

According to the invention, the system is a CD player or a DVD player.

According to the invention, the system may further include an internal storage device.

According to the invention, the above internal storage device in the system could be a hard disk, a ZIP floppy disk, a Magneto-Optical (MO), a magnetic tape or a flash memory card reader.

According to the invention, the host apparatus interface in the system could be any one of IDE interface, SCSI interface, CFA interface, or PCMCIA interface.

According to the invention, the USB-unadapted host apparatus in the system could be any one of hard disk drive, CD-ROM, DVD-ROM, CD-R, DVD-R, CD-RW, or DVD-RW.

According to the invention, the unit non-USB interface in the system could be any one of IDE interface, SCSI interface, CFA interface, or PCMCIA interface.

According to the invention, the converting circuit in the system is a IDE peripheral interface circuit adjoining to a USB host interface circuit.

In one embodiment of the invention, the connector in the system is IDE cable.

Other objects, advantages and novel features of the invention will become more apparent from the following detailed description when taken in conjunction with the accompanying drawings.

### BRIEF DESCRIPTION OF THE DRAWINGS

Fig. 1 is a block diagram showing the topology of IDE interface for Storage device in the prior art;
Fig. 2 is a block diagram showing the topology of USB connection in the prior art;
Fig. 3 is a block diagram showing the topology of from USB Host to IDE Peripheral to let the existing system with IDE Master Interface enjoy the USB connection advantage;
Fig. 4 is a block diagram of the complete implementation of the invention; and
Fig. 5 is a schematic diagram showing the internal structure of the converting unit.

### DETAILED DESCRIPTION OF THE PREFERRED EMBODIMENT

The technical features of the present invention will be described further with reference to the embodiments. The embodiments are only preferable examples without limiting to the present invention. It will be well understood by the following detail description in conjunction with the accompanying drawings.

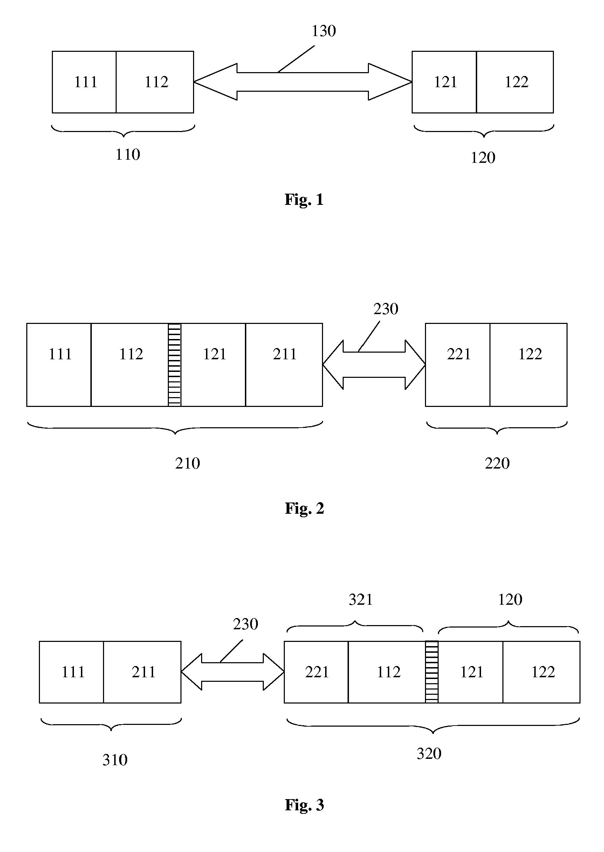

The Fig. 1 and 2 illustrate the conventional IDE connection and USB connection respectively. The conventional system topology of IDE interface for Mass Storage Media is shown in the Fig. 1. The Mass Storage Media **111** is connected to the Play **122** through the IDE cable **130,** also the IDE Peripheral Interface **112** at the end of the Mass Storage Media side and the IDE Master Interface **121** at the other end of the Player side. As known by the skilled in the art, the Storage Device System **110** is a slave under control from the Main Host System **120.** As for the USB host, the system topology of USB connection is directly cloned from the PC architecture and as shown in the Fig. 2. The Mass Storage Media **111** is connected to the Play **122** through the USB cable **230,** also the USB Client Interface **211** at the end of the Mass Storage Media side and the USB Host Interface **221** at the other end of the Player side. The IDE is connected and located inside the USB Storage Device System **210** (as indicated by the parallel lines).

The Fig. 3 is the schematic drawing of the proposed solution for letting the existing system with IDE Master Interface **121** enjoy the advantages of USB connection. The Mass Storage Media **111** is connected to the Play **122** through the USB cable **230,** also the USB Client Interface **211** at the end of the Mass Storage Media side and the USB Host Interface **221** at the other end of the Player side. The USB Host Interface **221** is adjoining to the IDE Peripheral Interface **112** and then connected to the IDE Master Interface **121** at the end of the Player side. The IDE is connected and located inside the Main Storage System **320** (as indicated by the parallel lines). It could be understood by the skilled in the art, the USB Device System **310** in the Fig. 3 can be any device integrated with USB Client Interface such as mass/flash storage, Ethernet, Modem, GPS, picture/movie camera, bluetooth, IrDa, WiFi, etc. The IDE interface is versatile and capable to communicate effectively with many different types of devices or those devices coming from the USB interface. In a system-wise view, the Player system is like in the Figure 1 to handle the USB connected device as IDE Peripheral device or its variants.

The advantages of the proposed approach are:
1. Fast time-to-market, using the traditional concepts, reorganizing the existing hardware and software architecture for system integration.
2. No special or new knowledge required for USB and IDE connections, and make things transparent in the system design.
3. Versatile and full-ranged applications in all platforms, using IDE connection inside the system is more effective to handle USB, IDE, CFA and PCMCIA interfaces.
4. The burden of re-implementation in the conventional Main Host System is released by the proposed hardware block.

More preferably, the Main Host System includes one or more internal storage media such as CD, DVD, Hard Disk, etc. In such a system, the music or video can be ripped into the Hard Disc through multi-media jukebox. To connect outside storage, a compact flash storage device is a good choice to share the IDE interface to transfer the content from the Hard Disc to compact flash storage device or encode the optical disc content into compact flash storage device. Of course, it can playback the content from the compact flash storage device directly.

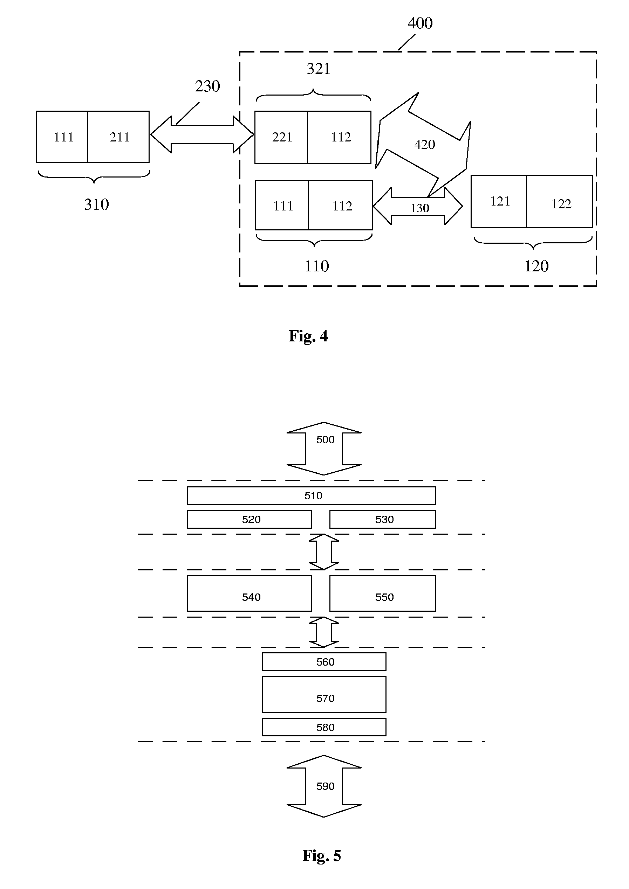

Referring to Fig. 4, the Mass Storage Media **111** is connected to the Play **122** through the USB cable **230,** also the USB Client Interface **211** at the end of the USB device **310** side and the USB Host Interface **221** at the other end of the System **400** side. The USB Host Interface **221** is adjoining to the IDE Peripheral Interface **112** and then connected to the IDE Master Interface **121** at the end of the Player **122** side via the IDE cable or other wire connection **420.** As discussed above, the system **400** may further comprise one or more internal storage device **110.** With the complete implementation shown in the Fig. 4, the system architecture can connect to different mass storage type such as USB mass storage device implemented in the mp3 player, Digital camera, PDA, Cellular Phone, PC flash thumb drive, etc.

In order to take both advantages as the easy implementation and USB connectivity, the hardware sub-system shown in the Fig. 4 is provided to convert USB connectivity into IDE interface as a bridge. Obviously, this system architecture will take the proposed sub-system as a virtual removable Hard Disc device in an application-wise view.

Refer to the Fig. 5 for the internal structure of the proposed converting unit. As shown in the Fig. 5, along the direction of the outgoing signal from the system to the external USB device, the proposed converting unit may contain IDE Bus 500, which connects to IDE peripheral interface & emulate logic; the IDE peripheral interface & emulate logic **510,** which create the interface and the mass storage operation logic; Data Buffer **520,** which used in the data transfer; Registers **530,** which used as IDE command and control registers; Mass storage Device Logic **540,** which provides the data exchange mechanism for configuration and state management and presents to its clients; USB System Control Logic **550,** which is responsible for managing USB bandwidth, power supply, device attachment and detachment; Host Controller **560,** which manages the data transfer between host and clients using the protocol and interconnection; Serial Interface Engine **570,** which handles the serial data input and output including data error correction and detection; PHY **580,** which is the electrical interface of the converting unit; USB bus **590,** which connects to external USB device.

The above internal structure should be taken as a preferable example and should not be the limitation to the invention.

As for USB 1.1 version, the converting unit could be either build-in the housing of the system or outside the housing to be an independent unit. Preferably, the outside independent unit is more cost efficient and is conformed with minimization of the system size.

As for USB 2.0 version, the converting unit could also be implemented either as an in-jack chip or an out-jack chip. More advantageously, the in-jack chip helps to simplify the architecture of the system.

## Claims

1. A converting unit (321) for converting a universal serial bus (USB) unadapted host apparatus (120) into a USB-adapted host apparatus, said USB-unadapted host apparatus having a host apparatus interface (121) for connecting a non-USB interface, a host apparatus input terminal for inputting a signal, and a host apparatus power supply input terminal for inputting a power supply,
said converting unit (321) including a unit non-USB interface (112) connected to said host apparatus interface (121), a unit output terminal connected to said host apparatus input terminal, a unit input terminal connected to said unit output terminal, a unit USB interface (221) for connecting a USB interface, a converting circuit for carrying out an interface conversion between said unit non-USB interface and said unit USB interface, and a unit power supply input terminal for inputting the power supply.

2. The converting unit (321) according to claim 1, **characterized in that** the host apparatus interface (121) could be any one of intelligent drive electronics (IDE) interface, small computer system (SCSI) interface, CFA interface, or PCMCIA interface.

3. The converting unit (321) according to claim 1, **characterized in that** the USB-unadapted host apparatus (120) could be any one of hard disk drive, CD-ROM, DVD-ROM, CD-R, DVD-R, CD-RW, or DVD-RW.

4. The converting unit (321) according to claim 1, **characterized in that** the unit non-USB interface (112) could be any one of IDE interface, SCSI interface, CFA interface, or PCMCIA interface.

5. The converting unit (321) according to claim 1, **characterized in that** the converting circuit is a IDE peripheral interface circuit adjoining to a USB host interface circuit.

6. A system (400), including a USB-unadapted host apparatus (120), at least one converting unit (321), and at least one connector (420),
said USB-unadapted host apparatus (120) connected to said at least one converting unit (321) via said at least one connector (420),
said USB-unadapted host apparatus (120) having at least one host apparatus interface (121) for connecting at least one non-USB interface, at least one host apparatus input terminal for inputting a signal, and a host apparatus power supply input terminal for inputting a power supply,
said converting unit (321) including a unit non-USB interface (112) connected to said host apparatus interface (121), a unit output terminal connected to said host apparatus input terminal, a unit input terminal connected to said unit output terminal, a unit USB interface (221) for connecting a USB interface, a converting circuit for carrying out an interface conversion between said unit non-USB interface and said unit USB interface, and a unit power supply input terminal for inputting the power supply.

7. The system (400) according to claim 6 is a CD player or a DVD player.

8. The system (400) according to claim 6 or 7, further includes an internal storage device (110).

9. The system (400) according to claim 8, **characterized in that** the internal storage device (110) could be a hard disk, a ZIP floppy disk, a Magneto-Optical (MO), a magnetic tape or a flash memory card reader.

10. The system (400) according to claim 8, **characterized in that** the host apparatus interface (121) could be any one of IDE interface, SCSI interface, CFA interface, or PCMCIA interface.

11. The system (400) according to claim 8, **characterized in that** the USB-unadapted host apparatus (120) could be any one of hard disk drive, CD-ROM, DVD-ROM, CD-R, DVD-R, CD-RW, or DVD-RW.

12. The system (400) according to claim 8, **characterized in that** the unit non-USB interface (112) could be any one of IDE interface, SCSI interface, CFA interface, or PCMCIA interface.

13. The system (400) according to claim 8, **characterized in that** the converting circuit is an IDE peripheral interface circuit adjoining to a USB host interface circuit.

14. The system (400) according to claim 8, **characterized in that** the connector (420) is an IDE cable.
